# EUROPEAN PATENT APPLICATION

(11) **EP 4 513 158 A1**
(43) Date of publication of application: **26.02.2025**
(21) Application number: 23834506.0
(22) Date of filing: 12.05.2023
(51) Int. Cl.: G01M 3/20

(54) **DOUBLE-VACUUM FOUR-CAVITY AIR TIGHTNESS TESTING METHOD AND TESTER FOR SQUARE SHELL BATTERY**

(30) Priority: 04.07.2022 CN 202210776961
(71) Applicant: Shenzhen Utimes Intelligent Equipment Co., Ltd., Shenzhen, Guangdong 518000 (CN)
(72) Inventor: CHEN, Xi, Shenzhen, Guangdong 518000 (CN); LIU, Yangdong, Shenzhen, Guangdong 518000 (CN); DENG, Qiaobing, Shenzhen, Guangdong 518000 (CN); PEI, Doudou, Shenzhen, Guangdong 518000 (CN)
(74) Representative: Sun, Yiming
(86) International application number: PCT/CN2023/093763
(87) International publication number: WO 2024/007732

(57) **Abstract**

The present disclosure provides a double-vacuum four-cavity hermeticity detecting method for a square housing battery. The method may include a loading device, four cavity devices, four cavity cover devices, four transplanting devices, two vacuum devices, a detecting device, and a discharging device, the four cavity cover devices may close over the four cavity devices to four sealed cavities, respectively, and each of the two vacuum devices may predetermine two sealed cavities. While operating simultaneously, the four sealed cavities may be loaded for 8s, vacuumed for 10s and detected for a hermeticity for 5s in a total of 15s, and discharged for 8s, a cycle time may be shortened to 8s and a production period may be shortened to 32s, and a productivity of hermeticity detection can be improved to 15 PPM according to two batteries per cavity. Further, the present disclosure provides a smallest vacuum system composed by a pump with a sealed cavity structure, after being contaminated by a tracer gas leaked from a detected battery in the sealed cavity, only a part involved in the cavity needs to be cleaned, which can minimize a downtime loss caused by the cleaning.

## Description

### TECHNICAL FIELD

The present disclosure belongs to a field of battery hermeticity detecting technology, and in particular, to a double-vacuum four-cavity hermeticity detecting method and machine for a square housing battery.

### BACKGROUND

A primary battery (hereinafter referred to as a battery) for a square housing battery is a sealed container containing a cell and an anhydrous electrolyte. A Poor battery sealing performance tends to cause a leakage of the anhydrous electrolyte during a use of the battery, more seriously, water vapor may seep in, which may condense into water and enter into the anhydrous electrolyte, thereby destroying an insulation of an internal electrochemical system of the battery, a small amount of water may cause the batteryto produce an abnormally high current caused by abnormal heat or even explosion and combustion in a charging process, the sealing performance of the battery may be related to a safety of the battery and a device using the device such as an electric car.

In a battery industry, through a hermeticity quantitative detection and a hermeticity leakage rate standard, a substandard product may be determined to screen out a battery with a relatively large leakage rate, which can ensure that the sealing performance of the used batteryis qualified and the safety of the used battery.

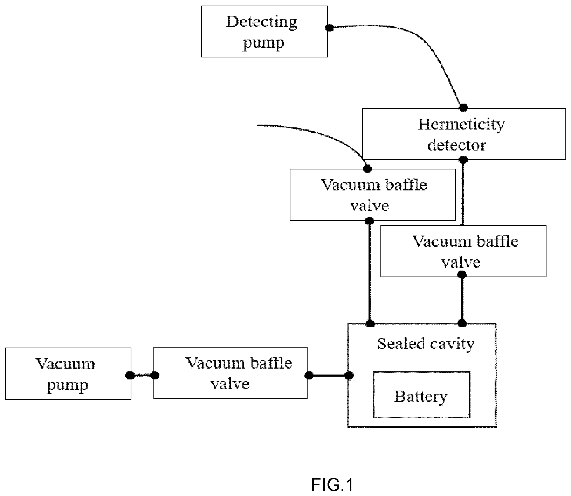

A sealing performance of a square aluminum-housing lithium battery needs to be detected after welding a top cover and a sealing nail cover of the battery. As shown in FIG. 1, the industry generally uses a tracer gas charged into the battery, and places a battery filled with the tracer gas in a sealed cavity and makes the sealed cavity a vacuum cavity by vacuuming the sealed cavity using a vacuum pump, an air pressure difference between inside and outside the battery may make the tracer gas leak outward to the vacuum cavity through possible welds, cracks, holes, slag, or the like, then use a detecting pump to connect with the vacuum cavity through a hermeticity detecting machine to extract the tracer gas, after a certain period of time, a flow rate of the tracer gas per unit time pumped away by the vacuum pump from the vacuum cavity may be the same as a flow rate of the tracer gas per unit time leaked to the vacuum cavity, i.e., a leakage rate of the tracer gas of the battery, and at this time, the flow rate of the tracer gas per unit time detected and pumped away by the hermeticity detecting machine is a detcted leakage rate of the tracer gas, referred to as a balance of the detected gas and the leakage gas.

In the vacuum cavity, detecting the leakage by filling the square housing battery with the tracer gas before welding the sealing nail cover of the battery is referred to be as a pre-hermeticity detection; and in the vacuum cavity, detecting the leakage by using a pre-sealed tracer gas inside the square housing battery after welding the sealing nail cover of the battery referred to be as a post-hermeticity detection. The post-hermeticity detection generally includes four processes: loading, vacuuming, hermeticity detecting, and discharging, and the shorter the four processes with consistent cycle times, the higher a capacity of the device.

A hermeticity detecting machine in the existing technology is a one-vacuum four-cavity hermeticity detecting machine, which includes a vacuum device with a vacuum pump, and a loading device, four cavity devices, four cavity cover devices, four transplanting devices,a detecting device and a discharging device. While operating simultaneously, the four cavity devices are loadedfor 8s, vacuumed for 10s, detected for a hermeticity 5s, and discharged for 8s sequentially, a cycle time is 10s, and a production period is 40s; a productivity of hermeticity detection is 12 PPM according to two batteries per cavity. Therefore, it can be seen that each functional device of the hermeticity detecting machine in the existing technology has been fully utilized, and the productivity of the hermeticity detection can not be further improved.

### SUMMARY

### TECHNICAL PROBLEM

The present disclosure provides a double-vacuum four-cavity hermeticity detecting method and machine for a square housing battery, which can operate simultaneously, thereby shortening a cycle time of hermeticity detection and improving the productivity of the hermeticity detection.

### TECHNICAL SOLUTION

The present disclosure is realized in this way: a double-vacuum four-cavity hermeticity detecting machine for a square housing battery, on the basis of an existing one-vacuum four-cavity hermeticity detecting machine, a vacuum devices is added, wherein the machine includes a loading device, four cavity device, four cavity cover devices, four transplanting devices, two vacuum devices, a detecting device and a discharging device, which are used for efficiently detecting a hermeticity for a square housing battery (hereinafter referred to as a battery);
for each cavity device of the four cavity devices, the cavity device includes a cavity for accommodating the battery;
the loading device is configured to load the battery into the four cavities sequentially;
for each cavity cover device of the four cavity cover devices, the cavity cover device is configured to close over the cavity to form a sealed cavity;
for each transplanting device of the four transplanting devices, the transplanting device is configured to load the cavity device and drive the cavity device to move between the loading device, the cavity cover device, and the discharging device;
for each vacuum device of the two vacuum devices, the vacuum device includes a vacuum pump and a vacuum pipeline, the vacuum pump is fixed on the machine platform, the vacuum pump is connected with the cavity cover device through the vacuum pipeline, and the vacuum pump is configured to vacuum the sealed cavity to make the sealed cavity a vacuum cavity;
the testing device is configured to extract a gas in the vacuum cavity for detecting a leakage rate of a tracer gas of battery sealing;
the discharging device is configured to discharge the battery from the four cavities sequentially.

Further, the loading device includes a support, an X-direction drive module, an X-direction support, a Z-direction drive module, a Z-direction support, a drive member of a clamping jaw, and a clamping jaw; the X-direction drive module is fixed on a top of the support, the X-direction support is fixed on a power output end of the X-direction drive module; the Z-direction drive module is fixed on the X-direction support, the drive member of the clamping jaw is fixed on a power output end of the Z-direction drive module, and the clamping jaw is fixed on a power output end of the drive member of the clamping jaw.

Further, the cavity device further includes a sealing ring, a cavity liner, and a cavity liner compartment for accommodating two or more batteries, the sealing ring is disposed around an open edge of a top of the cavity, the sealing ring is configured to seal the cavity to the cavity cover, the cavity liner is mounted in the cavity, and the cavity liner compartment located on the cavity liner.

Further, the cavity cover device includes a cavity cover support base plate, a cavity cover support column, a cavity cover, and a cavity cover top plate;
a bottom end of the cavity cover support column is fixed at a corner position of the cavity cover support base plate, and the vacuum pipeline is mounted on the cavity cover top plate; the cavity cover top plate is fixed at a top end of the cavity cover support column, and the cavity cover is mounted below the cavity cover top plate.

Further, the transplanting device includes a drive module, a drive module mounting plate, and a transplanting support, the drive module mounting plate is fixed on the machine platform, the drive module is mounted on the the drive module mounting plate, the transplanting support is mounted on a power output end of the drive module, and the drive module drives the transplanting support to move between the loading device, the cavity cover device, and the discharging device.

Further, the transplanting support includes a transplanting support base plate, a lifting and lowering drive member, a column, a sliding sleeve, a push plate, a baffle and a material sensor;
the transplanting support base plate is fixedly connected with the power output end of the drive module, the lifting and lowering drive member is fixed on the transplanting support base plate, the column is fixed vertically on the transplanting support base plate, the sliding sleeve is set on the column slidably, the push plate is fixedly connected with the sliding sleeve, a power output end of the lifting and lowering drive member is fixedly connected with the push plate, the baffle is fixed on a top of the column; the material sensor is mounted on the baffle, and the material sensor is configured to sense whether there is a material in the cavity;
the cavity device is fixed with the push plate, and the lifting and lowering drive member drives the push plate to rise and make the cavity device and the cavity cover device form the sealed cavity.

Further, the vacuum device further includes a vacuum baffle valve of the vacuum pipeline, the vacuum pipeline is connected between the vacuum pump and the cavity cover device, and the vacuum baffle valve of the vacuum pipeline is mounted on the vacuum pipeline for opening or closing the vacuum pipeline.

Further, the detecting device includes a detecting pump, a hermeticity detector, a detecting pipeline, a vacuum baffle valve group, and a vacuum gauge; the detecting pump is fixed on the machine platform, the detecting pipeline is connected between the detecting pump and the cavity cover device; the vacuum baffle valve group is mounted on the detecting pipeline for opening or closing the detecting pipeline; the hermeticity detector is mounted on the detecting pipeline between the vacuum baffle valve group and the detecting pump; the detecting pump is configured to pump a vacuum gas from the vacuum cavity into the hermeticity detector; the hermeticity detector is configured to detect a flow rate per unit of time of a tracer gas in the vacuum gas to obtain the leakage rate of the tracer gas of battery sealing; the vacuum gauge is mounted on the detecting pipeline between the vacuum baffle valve group and the cavity cover device for detecting a vacuum level inside the vacuum cavity.

Further, the vacuum baffle valve group includes two vacuum baffle valves of detecting pipeline, a muffler, and a cleaning gas connector, the two vacuum baffle valves of detecting pipeline are configured to open or close the detecting pipeline and to open or close a pipeline between the cleaning gas connector and the sealed cavity, respectively; the cleaning gas connector is configured to access a cleaning gas to remove the tracer gas from the sealed cavity; and the muffler is configured to exhale an air into the vacuum cavity or discharge the cleaning gas in the sealed cavity.

The discharging device is configuerd to discharge the battery after a detection from the cavitity of the four cavity devices in sequence, and a shape and configuration of the discharging device are the same as that of the loading device.

In order to realize the purpose of the present disclosure, the present disclosure further provides a double-vacuum four-cavity hermeticity detecting machine for a square housing battery, and a vacuum device that opens to two predetermined sealed cavities can be arranged based on the vacuum baffle valve of the vacuum pipeline.

Further, four transplanting devices and four cavity cover devices make four cavity devices being located in working stations of loading, vacuuming, hermeticity detecting, and discharging, respectively in sequence, and a loading device, two vacuum devices, a detecting device, and a discharging device operate simultaneously;
the loading device is configured to load a battery to four cavities sequentially;
at the same time, one of the two vacuum devices vacuums a first sealed cavity to make the first sealed cavity a first vacuum cavity, and then turns to vacuum a second sealed cavity to make the second sealed cavity a second vacuum cavity;
at the same time, the other of the two vacuum devices vacuums a third sealed cavity to make the third sealed cavity a third vacuum cavity, and then turns to vacuum a fourth sealed cavity and to make the fourth sealed cavity a fourth vacuum cavity, and then turns back to vacuum the third sealed cavity;
at the same time, the first vacuum cavity, the second vacuum cavity, the third vacuum cavity, and the fourth vacuum cavity are detected for a hermeticity by the detecting device; and
at the same time, the discharging device discharges the battery from the four cavities in sequence.

### BENEFICIAL EFFECTS

The beneficial effects of the present disclosure compared to the prior art are:
I. The loading, vacuuming, hermeticity detecting, and discharging can operate at the same time, and the four cavities can be loaded, vacuumed, detected for a hermeticity, and discharged in sequence, so that a production cycle can be shortened, and a cycle time can be shortened, and a productivity of hermeticity detection can be improved.
II. A smallest vacuum system can be composed by a pump with a sealed cavity structure. After being contaminated by a tracer gas leaked from a detectedbattery in the sealed cavity, , only a cavity, a sealing ring, a cavity liner, a cavity cover, a part of vacuum pipelines from a vacuum baffle valve of the vacuum pipeline to the cavity, the vacuum baffle valve of the vacuum pipeline, a detecting pipeline, and a vacuum gauge involved in the cavity need to be cleaned until an environment of the tracer gas is restored, which can minimize a downtime loss caused by the cleaning.

### BRIEF DESCRIPTION OF THE DRAWINGS

FIG. 1 is a schematic diagram illustrating an exemplary principle of hermeticity detecting of a square housing battery;
FIG. 2 is a schematic diagram illustrating an exemplary working station layout of a double-vacuum four-cavity hermeticity detecting machine for a square housing battery according to some embodiments of the present disclosure;
FIG. 3 is a schematic diagram illustrating an exemplary structure of a loading device in the double-vacuum four-cavity hermeticity detecting machine for a square housing battery shown in FIG. 2;
FIG. 4 is a schematic diagram illustrating an exemplary structure of a cavity device in the double-vacuum four-cavity hermeticity detecting machine for a square housing battery shown in FIG. 2;
FIG. 5 is a schematic diagram illustrating an exemplary structure of a cavity cover device in the double-vacuum four-cavity hermeticity detecting machine for a square housing battery shown in FIG. 2;
FIG. 6 is a schematic diagram illustrating an exemplary structure of a transplanting device of the double-vacuum four-cavity hermeticity detecting machine for a square housing battery shown in FIG. 2;
FIG. 7 is a schematic diagram illustrating an exemplary structure of a cavity device, a cavity cover device, and a transplanting device in the double-vacuum four-cavity hermeticity detecting machine for a square housing battery shown in FIG. 2;
FIG. 8 is a schematic diagram illustrating an exemplary structure of a vacuum device in the double-vacuum four-cavity hermeticity detecting machine for a square housing battery shown in FIG. 2;
FIG. 9 is a schematic diagram illustrating an exemplary structure of a detecting device in the double-vacuum four-cavity hermeticity detecting machine for a square housing battery shown in FIG. 2; and
FIG. 10 is a schematic diagram illustrating an exemplary structure of a vacuum baffle valve group in the detecting device shown in FIG. 9.

The reference signs in accompanying drawings are presented below.
10-battery, 100-machine platform,
200-loading device, 210-support, 220-X-direction drive module, 230-X-direction support, 240-Z-direction drive module, 250-Z-direction support, 260-drive member of a clamping jaw, 270-clamping jaw,
300-cavity device, 310-cavity, 320-sealing ring, 330-cavity liner, 331-cavity liner compartment,
400-cavity cover device, 410-cavity cover support base plate, 420-cavity cover support column, 430-cavity cover, 440- cavity cover top plate,
500- transplanting device, 510-drive module, 520- drive module mounting plate, 530- transplanting support, 531-transplanting support base plate, 532-lifting and lowering drive member, 533-column, 534-sliding sleeve, 535-push plate, 536-baffle, 537-material sensor,
600-vacuum device, 610-vacuum pump, 620-vacuum pipeline, 630-vacuum baffle valve,
700-detecting device, 710-detecting pump, 720-hermeticity detector, 730-detecting pipeline, 740-vacuum baffle valve group ,741-vacuum baffle valve of detecting pipeline, 742-muffler, 743-cleaning gas connector, 750-vacuum gauge,
800-discharging device.

### OPTIMAL EMBODIMENTS OF THE PRESENT DISCLOSURE

In order to make the objects, technical solutions, and advantages of the present disclosure clearer and more understandable, the present disclosure is described in further detail hereinafter in conjunction with the accompanying drawings and embodiments. It should be understood that the specific embodiments described herein are only for explaining the present disclosure and are not intended to limit the present disclosure.

In the description of the present disclosure, it is to be noted that the terms "center," "up," "down," "left," "right," "front," "back," "vertical," "horizontal," "inside," "outside," etc. indicate orientations or positional relationships based on those shown in the accompanying drawings, and are intended only for the purpose of facilitating the description of the present disclosure and simplifying the description, and are not intended to indicate or imply that the device or element referred to must be constructed and operated with a particular orientation, and are not to be construed as a limitation of the present disclosure; the terms "first," "second,", and "third" are used for descriptive purposes only and are not to be understood as indicative or suggestive of relative importance; furthermore, the terms "mounting,""connecting," "connected" are to be understood in a broader sense unless otherwise expressly provided and qualified, e.g., as a fixed connection, a removable connection, or a connection in one piece, as a direct connection, as an indirect connection through an intermediate medium, or as a connection within two parts. For those of ordinary skill in the art, the specific meaning of the above terms in the present disclosure may be understood in specific contexts.

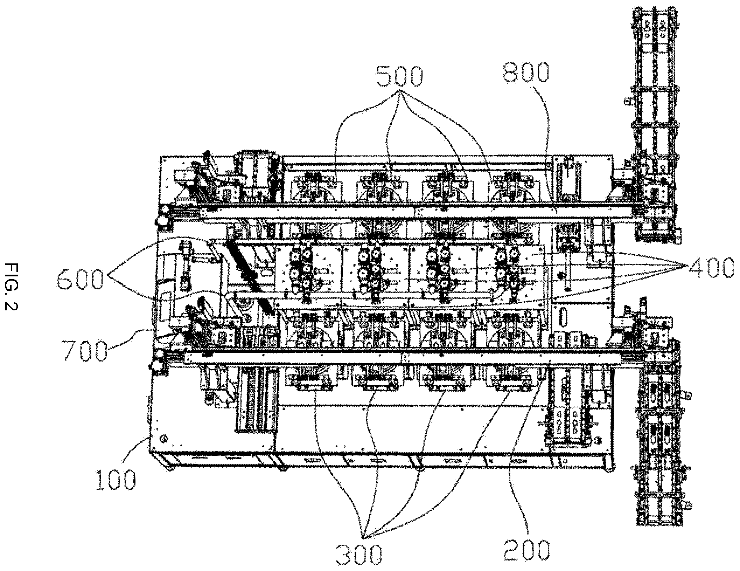

Referring to FIG. 2, FIG. 2 provides a double-vacuum four-cavity hermeticity detecting machine for a square housing battery in this embodiment, including a machine platform 100, a loading device 200, four cavity devices 300, four cavity cover devices 400, four transplanting devices 500, two vacuum devices 600, a detecting device 700, and a discharging device 800 that are fixed to the machine platform 100 for efficiently detecting a hermeticity of a square housing battery (hereinafter referred to as a battery).

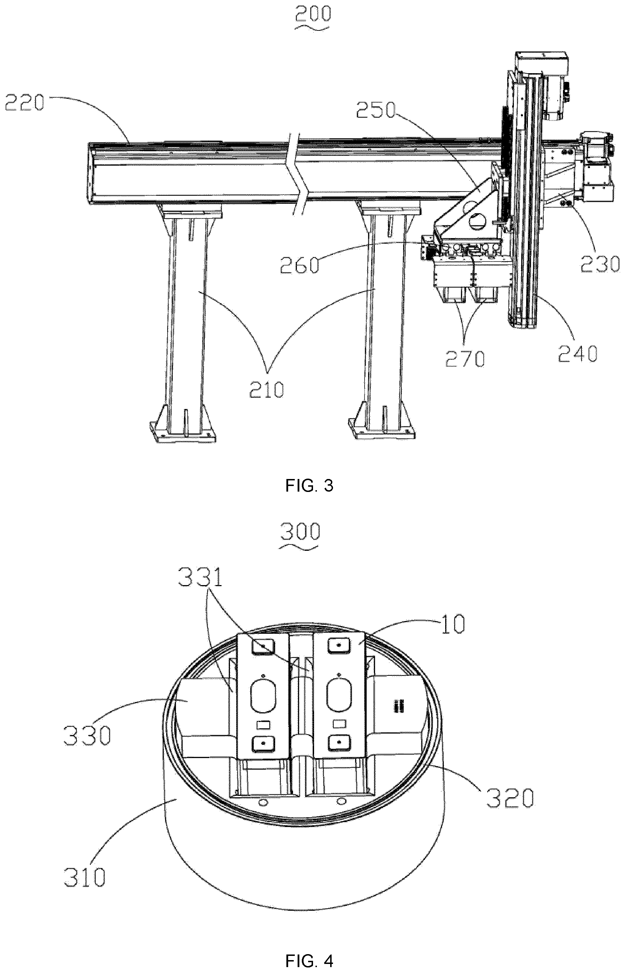

Referring to FIG. 3, the loading device 200 includes a support 210, an X-direction drive module 220, an X-direction support 230, a Z-direction drive module 240, a Z-direction support 250, a drive member of a clamping jaw 260, and a clamping jaw 270. The support 210 may be fixed to the machine platform 100, the X-direction drive module 220 may be fixed to a top of the support 210, and the X-direction support 230 may be fixed to a power output end of the X-direction drive module 220. The Z-direction drive module 240 may be fixed to the X-direction support 230, the driver member of the clamping jaw 260 may be fixed to a power output end of the Z-direction drive module 240, and the clamping jaw 270 may be fixed to a power output end of the drive member of the clamping jaw 260. The X-direction drive module 220 may drive the Z-direction drive module 240 to perform a linear reciprocating movement along an X-axis direction, the Z-direction drive module 240 may drive the driver member of the clamping jaw 260 to perform a linear reciprocating movement along a Z-axis direction, and the drive member of the clamping jaw 260 may drive the clamping jaws 270 to hold or release a battery 10, and the loading device 200 may be configrued to load the battery 10 into a cavities 310 of the four cavity devices 300 in sequence.

Referring to FIG. 4, the cavity device 300 may include the cavity 310 for accommodating the square housing battery 10, a sealing ring 320, a cavity liner 330 disposed in the cavity 310, the cavity liner 330 having two cavity liner compartment 331, wherein the cavity liner compartment 331 can accommodate two batteries 10. The sealing ring 320 may be disposed around an open edge of a top of the cavity 310, and the sealing ring 320 may be configrued to seal the cavity 310 and a cavity cover device 400.

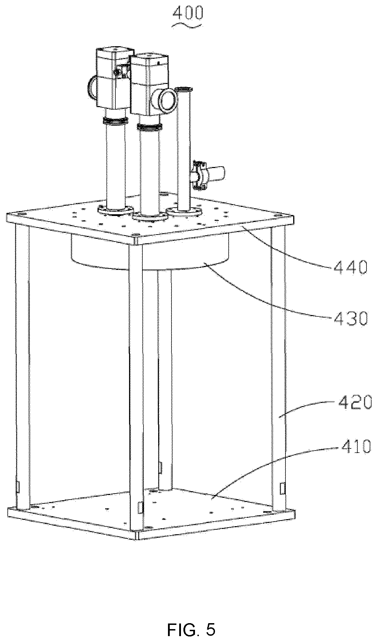

Referring to FIG. 5, the cavity cover device 400 may include a cavity cover support base plate 410, four cavity cover support columns 420, a cavity cover 430, and a cavity cover top plate 440. The cavity cover support base plate 410 may be fixed to the machine platform 100, and bottom ends of the cavity cover support columns 420 may be fixed at four corner positions of the cavity cover support base plate 410. The cavity cover top plate 440 may be fixed to a top end of the cavity cover support columns 420, and the cavity cover 430 may be arranged below the cavity cover top plate 340.

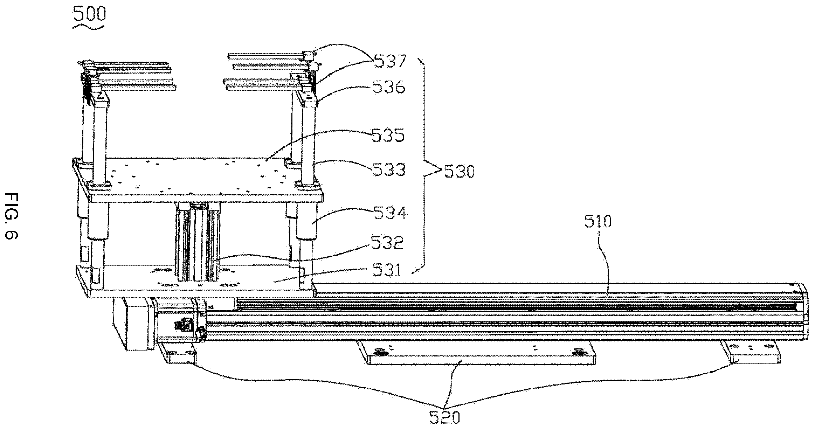

Referring to FIG. 6, a transplanting device 500 may include a drive module 510, a drive module mounting plate 520, and a transplanting support 530. The drive module mounting plate 520 may be fixed on the machine platform 100, the drive module 510 may be mounted on the drive module mounting plate 520, and the transplanting support 530 may be mounted on a power output end of the drive module 510, and the drive module 510 may drive the transplanting support 530 to move between the loading device 200, the cavity cover device 400, and a discharging device 800.

The transplanting support 530 may include a transplanting support base plate 531, a lifting and lowering drive member 532, a column 533, a sliding sleeve 534, a push plate 535, a baffle 536, and a material sensor 537.

The transplanting support base plate 531 may be fixedly connected with the power output end of the drive module 510, the lifting and lowering drive member 532 may be fixed to the transplanting support base plate 531, the columns 533 may be fixed vertically to the transplanting support base plate 531, the sliding sleeve 534 may be arranged on the column 533 slidably, the push plate 535 may be fixedly connected with the sliding sleeve 534, a power output end of the lifting and lowering drive member 532 may be fixedly connected with the push plate 535, and the baffle 536 may be fixed on a top of the column 533. The material sensor 537 may be arranged on the baffle 536, and the material sensor 537 may be configured to sense whether there is a material in the cavity 310.

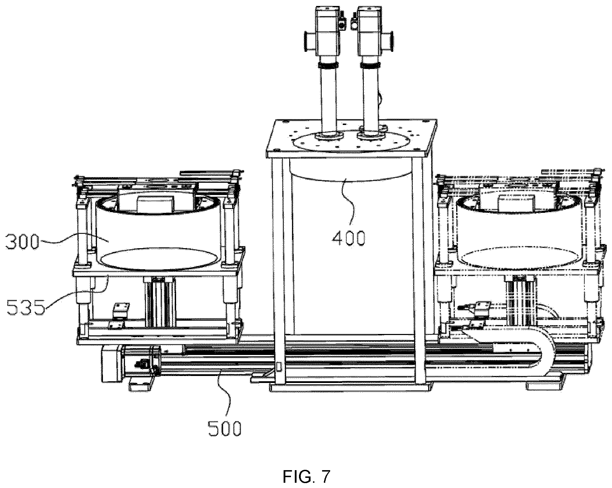

Referring to FIG. 7, the cavity device 300 may be fixed to the push plate 535, and when the material sensor 537 detect that there is material in the cavity 310, the lifting and lowering drive member 332 may drive the push plate 535 to rise and make the cavity cover device 400 cover the cavity device 300 to form a sealed cavity.

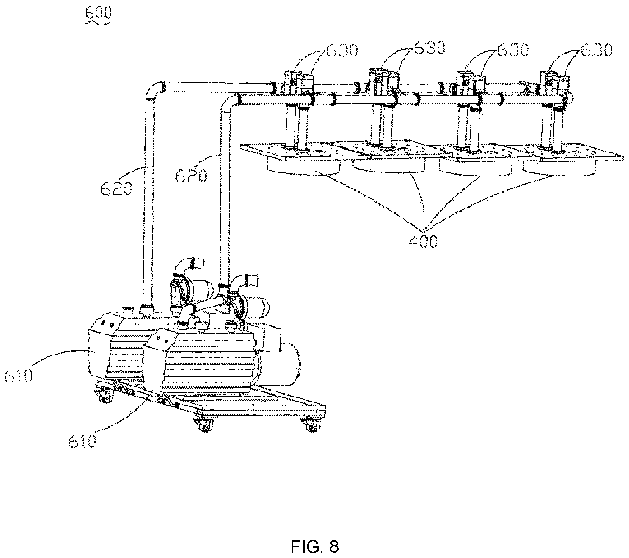

Referring to FIG. 8, a vacuum device 600 may include a vacuum pump 610, a vacuum pipeline 620, and a vacuum baffle valve of the vacuum pipeline 630. The vacuum pump 610 may be fixed to the machine platform 100, and the vacuum pipeline 620 may be connected between the vacuum pump 610 and the cavity cover device 400, wherein the vacuum baffle valve of the vacuum pipeline 630 may be arranged on the vacuum pipeline 620 to open or close the vacuum pipeline 620. The vacuum pump 610 may be capable of vacuuming the sealed cavity under when the vacuum pipeline 620 is open.

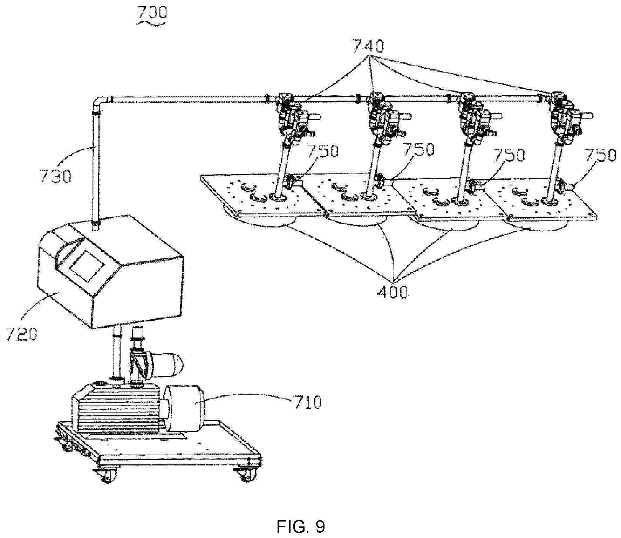

A detecting device 700 may be configured to extract a vacuum gas from a vacuum cavity for detecting a flow rate of a tracer gas per unit time. Referring to FIGs. 1 and 9, the detecting device 700 may include a detecting pump 710, a hermeticity detector 720, a detecting pipeline 730, a vacuum baffle valve group 740, and a vacuum gauge 750. The detecting pump 710 may be fixed on the machine platform 100, and the detecting pipeline 730 may be connected between the detecting pump 710 and the cavity cover device 400; the vacuum baffle valve group 740 may be arranged on the detecting pipeline 730 for opening or closing the detecting pipeline 730. The hermeticity detector 720 may be arranged on the detecting pipeline 730 between the vacuum baffle valve group 740 and the detecting pump 710, the detecting pump 710 may be configured to pump a vacuum gas in the vacuum cavity into the hermeticity detector 720, and the hermeticity detector 720 may be configured to detect a flow rate of the tracer gas in the vacuum gas per unit time to obtain a leakage rate of the tracer gas of battery sealing. The vacuum gauge 750 may be arrangde on the detecting pipeline 730 between the vacuum baffle valve group 740 and the cavity cover device 400 for detecting a vacuum level inside the vacuum cavity.

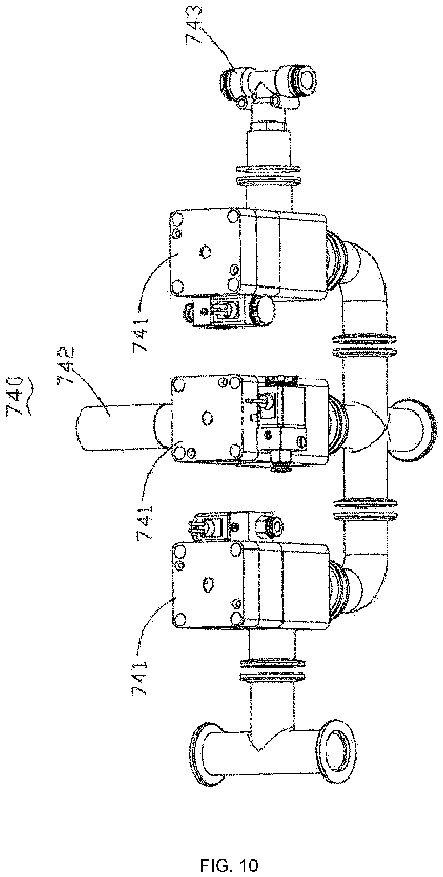

Specifically, referring to FIG. 10, the vacuum baffle valve group 740 may include two vacuum baffle valves of detecting pipeline 741, a muffler 742, and a cleaning gas connector 743, one of the two vacuum baffle valves of detecting pipeline 741 may be configured to open or close the detecting pipeline 730, and the other one of the two vacuum baffle valves of detecting pipeline may be configured to open or close a pipeline between the cleaning gas connector 743 and the sealed cavity, and the cleaning gas connector 743 may be configured to acess a cleaning gas to remove the tracer gas in the sealed cavity; the muffler 742 may be configured to exhale an air into the sealed cavity to break the vacuum or discharge the cleaning gas in the sealed cavity.

The discharging device 800 may be configured to discharge the detected battery 10 from the cavities 310 of the four cavity devices 300 in sequence, and a shape and configuration of the discharging device 800 may be the same as that of the loading device 200.

### EMBODIMENTS OF THE PRESENT DISCLOSURE

The embodiment also provides a double-vacuum four-cavity hermeticity detecting method for a square housing battery which uses the above-described double-vacuum four-cavity hermeticity detecting machine for a square housing battery, and two sealed cavities are provided for each of the two vacuum devices 600.

In one embodiment, the four sealed cavities are sequentially numbered as 1# cavity, 2# cavity, 3# cavity, and 4# cavity, the two vacuum devices 600 are numbered as series-1 and series-2, and the series-1 vacuum device 600 may be set to only open to the 1# cavity and the 3# cavity, and the series-2 vacuum device 600 may be set to only open to the 2# cavity and the 4# cavity by using the vacuum baffle valves of the vacuum pipeline 630, as configured in a following Table 1.

Further, the four transplanting devices 500 and the four cavity cover devices 400 may enable the four cavity devices 300 to be sequentially in working stations of loading, vacuuming, hermeticity detecting, and discharging, respectively, with the loading device 200, two vacuum devices 600, a detecting device 700, and a discharging device 800 operating simultaneously, and a process flow is shown in Table 1 below.

The loading device 200 may sequentially load the battery 10 into 1#, 4#, 3# and 2# cavities;
at the same time, the series-1 vacuum device 600 vacuums the 2# cavity to make the 2# cavity a vacuum cavity, and then turns to vacuum the 4# cavity to make the 4# cavity a vacuum cavity;
at the same time, the series-2 vacuum device 600 vacuums the 3# cavity to make the 3# cavity a vacuum cavity, and turns to vacuum the 1# cavity to make the 1# cavity a vacuum cavity, and then turns back to vacuum the 3# cavity;
at the same time, the detecting device 700 performs hermeticity detection on the 3# cavity, the 2# cavity, the 1# cavity, and the 4# cavity in sequence;
at the same time, the discharging device 800 discharges the battery 10 from the 4# cavity, the 3# cavity, the 2# cavity, and the 1# cavity in sequence.

**Table 1: A configuration and process flow of a double-vacuum four-cavity hermeticity detecting method for a square housing battery**

| **Period(s)** | **1# cavity** | **2# cavity** | **3# cavity** | **4# cavity** |
|---|---|---|---|---|
| **0~8** | Loading for 8s | Series-1 vacuuming for 8 s | Series-2 continuing to vacuum for 2s and performing hermeticity detection for 5s | Discharging for 8s |
| **8~16** | Series-2 vacuuming for 8 s | Series-1 continuing to vacuum for 2 s and performing hermeticity detection for 5s | Discharging for 8s | Loading for 8s |
| **16~24** | Series-2 continuing to vacuum for 2 s and performing hermeticity detection for 5s | Discharging for 8s | Loading for 8s | Series-1 turning to vacuum for 8s |
| **24~32** | Discharging for 8s | Loading for 8s | Series-2 turning to vacuum for 8s | Series-1 continuing to vacuum for 2s and performing hermeticity detection for 5s |

The operations of loading, vacuuming, hermeticity detecting, and discharging may operate simultaneously. In one embodiment, the four cavities 310 may be sequentially loaded for 8s, vacuumed for 10s, and then detected for a hermeticity for 5s in a total of 15s, and discharged for 8s, which a cycle time is reduced to 8s and a production cycle is shortened to 32s; and a productivity of hermeticity detection can be increased to 15 PPM according to the two batteries per cavity. It can be seen that this embodiment shortens the cycle time of four processes of the hermeticity detection of the battery 10 and improves the productivity of the hermeticity detection.

The embodiment provides a smallest vacuum system composed by a pump with a sealed cavity structure, after being contaminated by a tracer gas leaked from a detected battery in the sealed cavity, only the cavity 310, the sealing ring 320, the cavity liner 330, the cavity cover 430, a part of the vacuum pipelines 620 between the vacuum baffle group of the vacuum pipeline 630 and the cavity 310, the vacuum baffle valve of the vacuum pipeline 630, the detecting pipeline 730, the vacuum baffle valve of detecting pipeline 730, and the vacuum gauge 750 needs to be cleaned until an environment of the tracer gas is restored, thereby minimizing a downtime losses caused by the cleaning.

The foregoing is only a preferred embodiment of the present disclosure and is not intended to limit the invention, and any modifications, equivalent substitutions, improvements, etc., within the spirit and principles of the present disclosure shall be included in the scope of protection of the present disclosure.

## Claims

1. A double-vacuum four-cavity hermeticity detecting machine for a square housing battery, used for efficiently detecting a hermeticity of the square housing battery, comprising a machine platform, wherein the machine further comprises a loading device, four cavity devices, four cavity cover devices, four transplanting devices, two vacuum devices, a detecting device, and a discharging device;
for each cavity device of the four cavity devices, the cavity device includes a cavity for accommodating a battery;
the loading device is configured to load the battery into the four cavities sequentially;
for each cavity cover device of the four cavity cover devices, the cavity cover device is configured to close over the cavity to form a sealed cavity;
for each transplanting device of the four transplanting devices, the transplanting device is configured to load the cavity device and drive the cavity device to move between the loading device, the cavity cover device, and the discharging device;
for each vacuum device of the two vacuum devices, the vacuum device includes a vacuum pump and a vacuum pipeline, the vacuum pump is fixed on the machine platform, the vacuum pump is connected with the cavity cover device through the vacuum pipeline, and the vacuum pump is configured to evacuate the sealed cavity to make the sealed cavity a vacuum cavity;
the detecting device is configured to extract a gas in the vacuum cavity for detecting a leakage rate of a tracer gas of battery sealing; and
the discharging device is configured to discharge the battery from the four cavities sequentially.

2. The double-vacuum four-cavity hermeticity detecting machine for a square housing battery of claim 1, wherein the loading device includes a support, an X-direction drive module, an X-direction support, a Z-direction drive module, a Z-direction support, a drive member of a clamping jaw and a clamping jaw; the X-direction drive module is fixed on a top of the support, the X-direction support is fixed on a power output end of the X-direction drive module; the Z-direction drive module is fixed on the X-direction support, the drive member of the clamping jaw is fixed on a power output end of the Z-direction drive module, and the clamping jaw is fixed on a power output end of the drive member of the clamping jaw.

3. The double-vacuum four-cavity hermeticity detecting machine for a square housing battery of claim 1, wherein the cavity device further includes a sealing ring, a cavity liner, and a cavity liner compartment for accommodating two or more batteries, the sealing ring is disposed around an open edge of a top of the cavity, the sealing ring is configured to seal the cavity to the cavity cover, the cavity liner is mounted in the cavity, and the cavity liner compartment is located on the cavity liner.

4. The double-vacuum four-cavity hermeticity detecting machine for a square housing battery of claim 1, wherein the cavity cover device includes a cavity cover support base plate, a cavity cover support column, a cavity cover, and a cavity cover top plate;
a bottom end of the cavity cover support column is fixed at a corner position of the cavity cover support base plate, and the vacuum pipeline is mounted on the cavity cover top plate; the cavity cover top plate is fixed at a top end of the cavity cover support column, and the cavity cover is mounted below the cavity cover top plate.

5. The double-vacuum four-cavity hermeticity detecting machine for a square housing battery of claim 1, wherein the transplanting device includes a drive module, a drive module mounting plate, and a transplanting support, the drive module mounting plate is fixed on the machine platform, the drive module is mounted on the drive module mounting plate, the transplanting support is mounted on a power output end of the drive module, and the drive module drives the transplanting support to move between the loading device, the cavity cover device, and the discharging device.

6. The double-vacuum four-cavity hermeticity detecting machine for a square housing battery of claim 5, wherein the transplanting support includes a transplanting support base plate, a lifting and lowering drive member, a column, a sliding sleeve, a push plate, a baffle and a material sensor;
the transplanting support base plate is fixedly connected with the power output end of the drive module, the lifting and lowering drive member is fixed on the transplanting support base plate, the column is fixed vertically on the transplanting support, the sliding sleeve is set on the column slidably, the push plate is fixedly connected with the sliding sleeve, a power output end of the lifting and lowering drive member is fixedly connected with the push plate, the baffle is fixed on a top of the column; the material sensor is mounted on the baffle, and the material sensor is configured to sense whether there is a material in the cavity; and
the cavity device is fixed with the push plate, and the lifting and lowering drive member drives the push plate to raise and make the cavity device and the cavity cover device form the sealed cavity.

7. The double-vacuum four-cavity hermeticity detecting machine for a square housing battery of claim 1, wherein the vacuum device further includes a vacuum baffle valve of the vacuum pipeline, the vacuum pipeline is connected between the vacuum pump and the cavity cover device, and the vacuum baffle valve of the vacuum pipeline is mounted on the vacuum pipeline for opening or closing the vacuum pipeline.

8. The double-vacuum four-cavity hermeticity detecting machine for a square housing battery of claim 1, wherein the detecting device includes a detecting pump, a hermeticity detector, a detecting pipeline, a vacuum baffle valve group, and a vacuum gauge; the detecting pump is fixed on the machine platform, the detecting pipeline is connected between the detecting pump and the cavity cover device; the vacuum baffle valve group is mounted on the detecting pipeline for opening or closing the detecting pipeline; the hermeticity detector is mounted on the detecting pipeline between the vacuum baffle valve group and the detecting pump; the detecting pump is configured to pump a vacuum gas from the vacuum cavity into the hermeticity detector; the hermeticity detector is configured to detect a flow rate per unit of time of a tracer gas in the vacuum gas to obtain the leakage rate of the tracer gas of battery sealing; the vacuum gauge is mounted on the detecting pipeline between the vacuum baffle valve group and the cavity cover device for detecting a vacuum level inside the vacuum cavity.

9. The double-vacuum four-cavity hermeticity detecting machine for a square housing battery of claim 8, wherein the vacuum baffle valve group includes two vacuum baffle valves of detecting pipeline, a muffler, and a cleaning gas connector, the two vacuum baffle valves of detecting pipeline are configured to open or close the detecting pipeline and to open or close a pipeline between the cleaning gas connector and the sealed cavity, respectively; the cleaning gas connector is configured to access a cleaning gas to remove the tracer gas from the sealed cavity; and the muffler is configured to exhale an air into the vacuum cavity or discharge the cleaning gas in the sealed cavity.

10. A double-vacuum four-cavity hermeticity detecting method for a square housing battery, using a double-vacuum four-cavity hermeticity detecting machine for a square housing battery of any one of claims 1 to 7, wherein a vacuum device that only opens to two predetermined sealed cavities is arranged based on a vacuum baffle valve of a vacuum pipeline.

11. The double-vacuum four-cavity hermeticity detecting method for a square housing battery of claim 10, wherein four transplanting devices and four cavity cover devices make four cavity devices being located in working stations of loading, vacuuming, hermeticity detecting, and discharging, respectively in sequence, and a loading device, two vacuum devices, a detecting device, and a discharging device operate simultaneously;
the loading device is configured to load a battery to four cavities sequentially;
at the same time, one of the two vacuum devices vacuums a first sealed cavity to make the first sealed cavity a first vacuum cavity, and then turns to vacuum a second sealed cavity to make the second sealed cavity a second vacuum cavity;
at the same time, the other of the two vacuum devices vacuums a third sealed cavity and makes the third sealed cavity a third vacuum cavity, and then turns to vacuum a fourth sealed cavity to make the fourth sealed cavity a fourth vacuum cavity, and then turns back to vacuum the third sealed cavity;
at the same time, the first vacuum cavity, the second vacuum cavity, the third vacuum cavity, and the fourth vacuum cavity are detected for a hermeticity by the detecting device; and
at the same time, the discharging device discharges the battery from the four cavities sequentially.
